# EUROPÄISCHE PATENTSCHRIFT

(11) **EP 2 130 237 B1**
(45) Veröffentlichungstag und Bekanntmachung des Hinweises auf die Patenterteilung: **20.10.2010**
(21) Anmeldenummer: 08801117.6
(22) Anmeldetag: 28.07.2008
(51) Int. Cl.: H01L 41/09

(54) **POSITIONIERSYSTEM FÜR EINEN MIKROSTELLTISCH**
POSITIONING SYSTEM FOR A MICROSTAGE
SYSTÈME DE POSITIONNEMENT POUR TABLE MICRO-AJUSTÉE

(30) Priorität: 27.07.2007 DE 102007035346
(43) Veröffentlichungstag der Anmeldung: 09.12.2009
(73) Patentinhaber: Feinmess Dresden GmbH, 01259 Dresden (DE)
(72) Erfinder: BROMME, Alexander, 01445 Radebeul (DE)
(74) Vertreter: Pätzelt, Peter
(86) Internationale Anmeldenummer: PCT/DE2008/001281
(87) Internationale Veröffentlichungsnummer: WO 2009/015660

(56) Entgegenhaltungen:
- DE-A1-102004 059 844
- US-A- 5 847 488
- US-A- 6 093 930
- "Hybrid-Nanopositioniersysteme von PI" [Online] 30. Mai 2006 (2006-05-30), , XP002510444 Gefunden im Internet: URL:http://www.physikinstrumente.de/de/pdf /PI_Hybrid.pdf> in der Anmeldung erwähnt das ganze Dokument

## Beschreibung

### Technisches Gebiet

Die Erfindung betrifft ein Positioniersystem für einen Mikrostelltisch nach dem Oberbegriff des Anspruchs 1. Derartige Positioniersysteme werden in der Praxis zu vielfältigen Zwecken eingesetzt, bei denen genaue lineare Positionen im Bereich weniger µm bis nm realisiert werden sollen.

### Stand der Technik

Nach dem Stand der Technik werden zur linearen Positionierung von Mikrostelltischen neben Rotationsantrieben mit DC-Stellmotor mindestens teilweise auch Piezoantriebe verwendet. Dabei ist allgemein von Nachteil, dass lineare Stapel-Piezoantriebe nur geringe Hübe bis 0,5 mm realisieren können und mit rotatorischen Piezoantrieben bei maximal 0,2 Umdrehungen/s nur sehr geringe lineare Vorschubgeschwindigkeiten erreichbar sind.

Bei größeren Vorschüben sind kombinierte Antriebe erforderlich, bei denen größere translatorische Bewegungen über einen Motorantrieb und die genaue lineare Positionen mit Piezoantrieben erfolgt. Bekannt ist ein Nanopositionier-System mit Hybridantrieb der Fa. Physik Instrumente (PI), Karlsruhe, DE (http://www.physikinstrumente.de/de/ pdf/PI_Hybrid.pdf), bei dem große Stellwege bis zu mehreren 100 mm mit Auflösungen von wenigen Nanometern realisiert werden. Ein Servomotor bewegt über einen Kugelgewindetrieb einen Schlitten, auf dem der Messtisch gelagert ist.

Zwischen Schlitten und Messtisch befindet sich ein linearer Piezoaktor. Die Regelung des gestapelten Systems erfolgt getrennt für beide Regelungssysteme, wobei der Piezoaktor üblicherweise erst aktiv wird, nachdem der Motorantrieb in einem differenzierten Toleranzband eingeregelt hat. Beide Antriebssysteme werden gemeinsam über denselben Sensor geregelt. Die mechanische Integration erfolgt über die Entkopplung der bewegten Plattform vom motorischen Antrieb über spiel- und reibungsfreie Festkörpergelenke und hochsteife Piezoaktoren. Die Piezoaktoren ermöglichen so eine gleichzeitige kontinuierliche hochaufgelöste Bewegung der Plattform zur Kompensation der Regelabweichungen des motorischen Antriebes.

Nachteilig ist dabei, dass die lineare Wirksamkeit des Piezoaktors unabhängig vom motorischen Antrieb auf seine jeweilige maximale Bewegung begrenzt ist.

Die DE 10 2004 059 844 A1 gibt eine Linearführungsanordnung an, bei der ein Schlittenelement über wenigstens einen Gewindetrieb auf mindestens einem Führungselement parallel verschoben werden kann. Zur Feinpositionierung des Schlittenelementes ist wenigstens ein Festkörperantriebselement vorhanden, welches zwischen dem Schlittenelement und der Gewindemutter des Gewindetriebes angeordnet ist. Bei ruhendem Gewindetrieb kann das Schlittenelement durch das Festkörperantriebselement, z.B. ein Piezoverstellelement, auf dem Führungselement verschoben werden.

### Darstellung der Erfindung

Der Erfindung liegt als Aufgabe zugrunde, ein Positioniersystem für einen Mikrostelltisch mit einem Rotationsantrieb mit DC-Stellmotor und einem rotatorischen Piezomotor anzugeben, bei dem die lineare Verstelllänge innerhalb der Verstelllänge des Motorantriebes unbegrenzt ist. Weiterhin soll das Positioniersystem bei hoher Verstellgenauigkeit einen geringen technischen Aufwand erfordern.

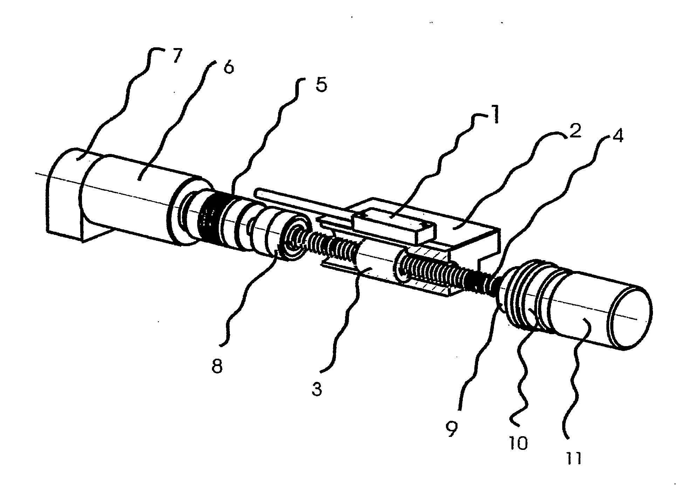

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Das Positioniersystem weist in bekannter Weise einen DC-Stellmotor oder einen entsprechenden Rotationsantrieb auf, der über eine Gewindespindel und eine Spindelmutter, in der Praxis regelmäßig ein Kugelgewindetriebe, mit dem Mikrostelltisch gekuppelt ist. Erfindungsgemäß ist am Ende der Gewindespindel, das dem DC-Stellmotor gegenüberliegt, ein rotatorischer Piezomotor vorgesehen, der über eine permanent-elektromagnetische Kupplung mit der Gewindespindel gekuppelt ist. D.h. die beiden Drehantriebe, der DC-Stellmotor für große Stellwege und der rotatorischer Piezomotor für Stellwege im Nanometerbereich, wirken auf die gleiche Gewindespindel.

Bei der Anwendung des Positioniersystems wird der Mikrostelltisch vom DC-Stellmotor über das Kugelgewindetriebe in eine technologisch vorbestimmte Position gebracht und die permanent-elektromagnetische Kupplung wird derart aktiviert, dass unmittelbar der rotatorische Piezomotor mit der Gewindespindel gekuppelt wird, während der DC-Stellmotor von der Gewindespindel entkuppelt ist.

Entsprechend der Ansprüche 2 bzw. 3 kann die permanent-elektromagnetische Kupplung im Ruhezustand durch die permanentmagnetischen Kräfte oder durch die elektromagnetischen Kräfte mit der Gewindespindel gekuppelt sein. Welche Art der Kupplung eingesetzt wird, ist von der technologischen Aufgabe abhängig. Es ist vorteilhaft, die Kupplung derart auszubilden, dass die elektromagnetischen Kräfte nur in der technologisch kürzeren Zeit eingesetzt werden, d.h. wenn zeitlich der Piezomotor mehr im Einsatz ist, als der DC-Stellmotor.

Das erfindungsgemäße Positioniersystem ermöglicht hochgenaue Positionierung des Mikrostelltisches allein über die Gewindespindel des Rotationsantriebes. Dabei wird der Mikrostelltisch bei großen Verstellwegen, z.B. bis 300 mm mit dem DC-Stellmotor und bei kleinen Verstellwegen im pm- und nm-Bereich vom Piezomotor bewegt.

### Ausführungsbeispiel

Die Erfindung wird nachstehend an einem Ausführungsbeispiel näher erläutert. Die zugehörige Zeichnung zeigt eine schematische Perspektivansicht eines erfindungsgemäßen Positioniersystems.

In bekannter Weise ist beispielhaft ein inkrementelles Messsystem 1 auf einem Schlittensystem 2 angeordnet. Das Schlittensystem 2 kann über die Spindelmutter 3 eines Kugelgewindetriebes von einer Gewindespindel 4 translatorisch bewegt werden. Dazu ist die Gewindespindel 4 über eine Balgkupplung 5 axial mit einem DC-Stellmotor 6 verbunden. Am DC-Stellmotor 6 ist ein Rotationsencoder 7 vorgesehen. Die Gewindespindel 4 ist beidseitig des Schlittensystems 2 gelagert, wobei zum DC-Stellmotor 6 hin ein Festlager 8 und auf der anderen Seite ein Loslager 9 vorgesehen ist.

Erfindungsgemäß ist am Loslager 9 eine permanent-elektromagnetische Kupplung 10 angeflanscht, die unmittelbar axial mit einem rotatorischen Piezomotor 11 verbunden ist. Dabei kann die permanent-elektromagnetische Kupplung 10 sowohl derart ausgebildet sein, dass sie im Ruhezustand mit der permanentmagnetischen Kraft eine Kupplung der Gewindespindel 4 mit dem Piezomotor 11 bewirkt, als auch umgekehrt, derart dass der Piezomotor 11 von der Gewindespindel 4 entkuppelt wird. Der DC-Stellmotor 6 ist über die Balgkupplung 5 ständig mit der Gewindespindel 4 verbunden.

Welche Art der Kupplung 10 eingesetzt wird, ist von der technologischen Aufgabe abhängig. Es ist vorteilhaft, die Kupplung 10 derart auszubilden, dass die elektromagnetischen Kräfte nur in der technologisch kürzeren Zeit eingesetzt werden, d.h. wenn zeitlich der Piezomotor 11 mehr im Einsatz ist, als der DC-Stellmotor 6. Dann wird in vorteilhafter Weise eine solche Kupplung 10 eingesetzt, bei der der Piezomotor 11 über die permanentmagnetische Kraft mit der Gewindespindel 4 gekuppelt ist. Wenn der DC-Stellmotor 6 zum Einsatz kommen soll, werden an der Kupplung 10 die elektromagnetischen Kräfte zugeschaltet, wodurch die permanentmagnetischen Kräfte überwunden werden und der Piezomotor 11 von der Gewindespindel 4 entkuppelt wird.

### Liste der verwendeten Bezugszeichen

- 1: Messsystem
- 2: Schlittensystem
- 3: Spindelmutter
- 4: Gewindespindel
- 5: Balgkupplung
- 6: DC-Stellmotor
- 7: Rotationsencoder
- 8: Festlager
- 9: Loslager
- 10: permanent-elektromagnetische Kupplung
- 11: rotatorischer Piezomotor

## Patentansprüche

1. Positioniersystem für einen Mikrostelltisch mit einen DC-Stellmotor (6), der über eine Gewindespindel (4) und eine Spindelmutter (3) mit dem Mikrostelltisch gekuppelt ist, **dadurch gekennzeichnet, dass** an dem Ende der Gewindespindel (4), das dem DC-Stellmotor (6) gegenüberliegt, ein rotatorischer Piezomotor (11) vorhanden ist, der über eine permanent-elektromagnetische Kupplung (10) mit der Gewindespindel (4) gekuppelt ist.

2. Positioniersystem nach Anspruch 1, **dadurch gekennzeichnet, dass** die permanent-elektromagnetische Kupplung (10) im Ruhezustand durch die permanentmagnetischen Kräfte mit der Gewindespindel (4) gekuppelt ist.

3. Positioniersystem nach Anspruch 1, **dadurch gekennzeichnet, dass** die permanent-elektromagnetische Kupplung (10) im Ruhezustand durch die elektromagnetischen Kräfte mit der Gewindespindel (4) gekuppelt ist.

## Claims

1. Positioning system for a micropositioning stage with a DC servomotor (6), which is coupled to the micropositioning stage via a threaded spindle (4) and a spindle nut (3), **characterized in that** a rotary piezoelectric motor (11) is provided at that end of the threaded spindle (4) which is opposite the DC servomotor (6), said rotary piezoelectric motor (11) being coupled to the threaded spindle (4) via a permanent-electromagnetic coupling (10).

2. Positioning system according to Claim 1, **characterized in that** the permanent-electromagnetic coupling (10) is coupled to the threaded spindle (4) in the rest state by the permanent-magnetic forces.

3. Positioning system according to Claim 1, **characterized in that** the permanent-electromagnetic coupling (10) is coupled to the threaded spindle (4) in the rest state by the electromagnetic forces.

## Revendications

1. Système de positionnement pour table micro-ajustée, comprenant un moteur de commande à courant continu (6) qui est accouplé par le biais d'une broche filetée (4) et d'un écrou de broche (3) à la table micro-ajustée, **caractérisé en ce qu'**à l'extrémité de la broche filetée (4) qui est opposée au moteur de commande à courant continu (6), est prévu un moteur piézoélectrique rotatif (11) qui est accouplé par le biais d'un accouplement électromagnétique permanent (10) à la broche filetée (4).

2. Système de positionnement selon la revendication 1, **caractérisé en ce que** l'accouplement électromagnétique permanent (10) est accouplé au repos à la broche filetée (4) par les forces magnétiques permanentes.

3. Système de positionnement selon la revendication 1, **caractérisé en ce que** l'accouplement électromagnétique permanent (10) est accouplé au repos à la broche filetée (4) par les forces électromagnétiques.
